# EUROPEAN PATENT SPECIFICATION

(11) **EP 0 732 360 B1**
(45) Date of publication and mention of the grant of the patent: **03.05.2000**
(21) Application number: 96200628.4
(22) Date of filing: 07.03.1996
(51) Int. Cl.: C08K 5/10, C08L 69/00

(54) **Composition containing polycarbonate and a friction-reducing agent and objects obtained therefrom**
Zusammensetzung enthaltend Polycarbonat und reibungsverminderendes Mittel und daraus hergestellte Gegenstände
Composition contenant du polycarbonate et d'un agent de réduction de friction ainsi que objets obtenus à partir de celle-ci

(30) Priority: 13.03.1995 BE 9500212
(43) Date of publication of application: 18.09.1996
(73) Proprietor: DSM N.V., 6411 TE Heerlen (NL)
(72) Inventor: Frusch, Johannes Maria, NL-6121 HT Born (NL); Van Doorn, Markus Albertus Martha Maria, NL-6191 BZ Beek (L.) (NL)

(56) References cited:
- EP-A- 0 492 550
- FR-A- 2 356 698
- GÄCHTER/MÜLLER 'Kunststoff-Additive', 1990, HANSER, MÜNCHEN WIEN * page 497 *

## Description

The invention relates to a composition containing a polycarbonate and a friction-reducing agent. The invention also relates to objects wholly or partially consisting of the composition.

Low friction between mating product surfaces is highly desirable for a number of products. Separation of nested stackable trays, for instance, is greatly facilitated by the use of a low-friction material. Furthermore, in the toy industry there is a great need for compositions that can yield objects having low friction. The popular interlocking Lego® toy construction elements, for instance, must be very easy to assemble and disassemble without the use of much force. The ease with which this can be done depends in large part on the friction between the contact surfaces of the interlocking building blocks.

Transparent toy construction elements are usually manufactured from polycarbonate-containing compositions. Such compositions are known per se, for instance from DE-A-2729485.
DE-A-2729485 discloses a composition which contains polycarbonate and an ester of a saturated aliphatic carboxylic acid with an alcohol. The ester in the composition ensures that, on completion of the moulding process, an object manufactured from the composition is released more readily from the mould.

A disadvantage of the known polycarbonate-containing composition is that the desired low friction of the object manufactured from it is only obtained with an appreciable loss of transparency of the object.

The invention aims to provide a polycarbonate-containing composition from which objects can be produced having the desired low friction and a transparency comparable with that of a polycarbonate-containing composition that does not contain the friction-reducing agent.

To that end, the polycarbonate-containing composition of the invention is characterized in that the friction-reducing agent comprises a first ester of a saturated aliphatic carboxylic acid with a polyhydric alcohol and a second ester, characterized in that the second ester is a monoester of a saturated aliphatic carboxylic acid having 16 to 24 carbon atoms and an alcohol having from 14 to 20 carbon atoms, the first and second ester being different from each other.

EP-A-0492550 discloses a polycarbonate composition comprising a release agent comprising a mixture of an ester of a trihydrical alcohol, (glycerol), and a C₁₆-C₁₈ carboxylic acid and an ester of a saturated aliphatic C₁₀-C₂₀ acid and a C₄-C₆ alcohol. The object of the composition of EP-A-0492550 is to obtain an improved mould release. No suggestion can be found that the specific ester of a saturated aliphatic carboxylic acid having from 16 to 24 carbon atoms and the alcohol having from 14 to 20 carbon atoms will result in superior optical properties of the objects made thereof.

The specific combination of the esters in the polycarbonate composition of the invention yields objects having the desired low friction and, surprisingly, a transparency equal to or only slightly different from the transparency of objects in polycarbonate without friction- reducing agent.

Moreover, the composition of the invention provides for objects with low haziness.

Transparency is a yardstick of the translucency of an object whereas the haziness is much rather a measure of light scatter in an object. The transparency and haziness of objects are well defined concepts. For the purposes of this application, transparency and haziness are defined as described in ASTM standards D1746 and D1003, respectively.

A further advantage of the composition of the invention is that a relatively small amount of friction-reducing agent suffices for the envisaged effect to be achieved.

Suitable saturated aliphatic carboxylic acids that may be applied in the preparation of the first and/or second ester of the present invention are carboxylic acids having from 10 to 26 carbon atoms. Examples of suitable saturated aliphatic carboxylic acids are decanoic acid (capric acid), undecanoic acid, dodecanoic acid (lauric acid), tridecanoic acid, tetradecanoic acid (myristic acid, pentadecanoic acid, hexadecanoic acid ( palmitic acid), heptadecanoic acid, octadecanoic acid (stearic acid), nonadecanoic acid, eicosanoic acid (arachidic acid), heneicosanic acid, docosanoic acid (behenic acid) and so forth.

Suitable alcohols that may be applied in the preparation of the first and/or the second ester of the invention are aliphatic alcohols having from 2 to 25 carbon atoms. Examples of polyhydric alcohols suitable for the first ester include ethylene glycol, diethylene glycol, triethylene glycol, tetraethylene glycol, propylene glycol, dipropylene glycol, trimethylene glycol, glycerol and pentaerythritol. The first ester can for example be obtained by partly esterification of the above mentioned polyhydric alcohols.

It is preferred for a stearate to be used as first ester in the composition of the invention.

Most preferably this stearate is chosen from the group comprising glycerol tristearate and ethylene glycol distearate.

The second ester is a mono- ester of a carboxylic acid having form 16 to 24 carbon atoms and an alcohol having from 14 to 20 carbon atoms.

In this way, one attains not only a further reduction of the friction while retaining the transparency of the object but also further improved processability and temperature resistance of the composition of the invention.

The composition of the invention normally contains from 0.01 to 10 wt.% friction-reducing agent relative to the total weight of the composition.

Preferably, however, the composition is characterized in that it contains from 0.5 to 5 wt.% friction-reducing agent
relative to the total weight of the composition. More preferably, this is from 0.5 to 3 wt.%.

In this way, a further increase in transparency of the object is attained.

The composition of the invention preferably contains from 0.5 to 3 wt.% first ester relative to the total weight of the composition. More preferably, this is from 0.5 to 2 wt.%.

In this way, a still further increase in transparency of the composition is attained at equally low friction.

Suitable polycarbonates that may be applied in the composition of the invention are aromatic polycarbonates and blockcopolymers which contain aromatic an aliphatic polycarbonate blocks. Linear and branched polycarbonates may
also be used. Such polycarbonates and their preparation are described in for example Kunststoff Handbuch, Hanser Verlag, München, Germany, 1992, pages 118-148.

The aromatic polycarbonates may be prepared in for instance the usual manner by converting a bivalent phenol with a carbonate precursor using an interfacial polymerization process as described in for instance WO 94/01494.

Additives that are usual in polycarbonates may be added to the composition of the invention on the understanding that the transparency of an object produced from it should remain at a sufficiently high level. Suitable additives are for instance thermal stabilizers such as organic phosphites and phenolic antioxidants, UV stabilizers as well as hydrolysis-inhibiting agents, flame retardants, drip-preventing agents and inert fillers. Colorants and small amounts of pigment may also be added.

The composition of the invention may be prepared and processed in a manner known to those skilled in the art. The composition can be prepared using for instance static kneaders. Use may also be made of a continuous kneader such as single-screw extruders and co-rotating twin-screw extruders as supplied by W&P® of Germany. The composition can also be prepared with excellent results using a Buss® cokneader.

Processing of the composition into objects is also effected in a manner known to those skilled in the art, for instance by injection moulding or pressing. Use may also be made of processing techniques such as extrusion, blow-moulding or vacuum-moulding.

The invention is illustrated by the following examples without being limited thereto.

### Materials Used

- PC: Polycarbonate with an LVN (limiting viscosity number) of 45.7 ml/g, measured to ISO 1628 in dichloromethane supplied by DSM, of Geleen, the Netherlands at 20°C.
- E1: Loxiol® EP 218, a glycerol tristearate from Messrs Henkel, of Düsseldorf, Germany.
- E2: Loxiol® EP 12, a glycerol monostearate from Messrs Henkel, of Düsseldorf, Germany.
- E3: Loxiol® EP 32, an ester based on an alcohol having 16 carbon atoms and stearic acid, from Messrs Henkel, of Düsseldorf, Germany.
- E4: Loxiol® EP 47, an ester based on an alcohol having 18 carbon atoms and behenic acid, from Messrs Henkel, of Düsseldorf, Germany.
- A1: PPG 2000, a polypropylene glycol from Messrs Dow Chemicals.
- A2: Irgawax® 366, a purified hydrocarbon wax from Messrs Ciba-Geigy.
- A3: Dow Corning 710 Fluid, a phenyl-methyl polysiloxane compound from Messrs Dow Corning.
- A4: CF1142, a phenyl-methyl polysiloxane compound from Messrs General Electric.

### Tests conducted

### 1. Tribological

- SFC:: Static Friction Coefficient measured to ASTM D1894.
- DFC:: Dynamic Friction Coefficient measured to ASTM D1894.

### 2. Optical

- TR:: Transparency measured to ASTM D1746.
- Haze:: Haze measured to ASTM D1003

### Examples I through VI and Comparative Experiments A through C

This series compares polycarbonate compounds of the invention with compositions to which only one ester is added in comparable amounts.

The components stated in Table 1 were extruded to granulate at a temperature of about 300°C (280-320°C), which is usual for polycarbonate. This was done using a type ZSK®25 twin-screw kneader supplied by Messrs W&P of Germany. The components were mixed at the weight ratios stated in Table 1. To all compositions was added the same package of additives consisting of stabilizers and lubricants (Add. in Table 1), which is usual for polycarbonate.

The granulate obtained was then dried for 4 hours at a temperature of 120°C and injection-moulded to test plates. During this operation the melt temperature was about 290-300°C and the mould temperature was about 90°C. Subsequently, the test plates were subjected to the tests mentioned above. The results are given in Table 2.

The results indicate that it is only the composition of the invention which leads to the desired combination of properties, i.e. a high optical quality (high transparency and low haziness) and low friction. The composition of Comparative Experiment A exhibits too high friction whilst the compositions of Comparative Experiments B and C yield too high a haziness.

**Table 1**

| Number | PC (wt.%) | E1 (wt.%) | E2 (wt.%) | E3 (wt.%) | E4 (wt.%) | Add. (wt.%) |
|---|---|---|---|---|---|---|
| I Comp. | 97.4 | 2.00 | 0.50 | - | - | 0.10 |
| II | 97.4 | 2.00 | - | | 0.50 | 0.10 |
| III Comp. | 96.9 | 2.00 | 1.00 | - | - | 0.10 |
| IV | 96.9 | 2.00 | - | - | 1.00 | 0.10 |
| V | 97.4 | 2.00 | - | 0.50 | - | 0.10 |
| VI | 96.9 | 2.00 | - | 1.00 | - | 0.10 |
| A | 99.6 | 0.30 | - | - | - | 0.10 |
| B | 97.9 | 2.00 | - | - | - | 0.10 |
| C | 97.2 | 2.75 | - | - | - | 0.10 |

**Table 2**

| Number | TR (%) | Haze (%) | SFC (-) | DFC (-) |
|---|---|---|---|---|
| I Comp. | 89.7 | 0.57 | 0.27 | 0.30 |
| II | 90.6 | 0.46 | 0.26 | 0.25 |
| III Comp. | 89.7 | 0.65 | 0.26 | 0.30 |
| IV | 90.4 | 0.48 | 0.25 | 0.25 |
| V | 90.5 | 0.34 | 0.27 | 0.25 |
| VI | 90.5 | 0.43 | 0.34 | 0.25 |
| A | 90.1 | 0.67 | 0.75 | 0.60 |
| B | 90.4 | 0.88 | 0.37 | 0.37 |
| C | 90.0 | 1.05 | 0.30 | 0.30 |

### Example IV and Comparative Experiments J and K

This series compares polycarbonate compositions of the invention with compositions to which one lubricant other than an ester is added in comparable amounts.

Test plates of the compositions stated in Table 3 were obtained in the same way as described in Examples I through IX. Table 4 shows the results obtained with these test plates.

Adding an alcohol (PPG 2000) or a hydrocarbon wax (Irgawax) does not lead to the desired effect. It is especially the desired low friction which is not attained. Also, haziness is undesirably high.

**Table 3**

| Number | PC (wt.%) | E1 (wt.%) | E4 (wt.%) | A1 (wt.%) | A2 (wt.%) | Add. (wt.%) |
|---|---|---|---|---|---|---|
| IV | 96.9 | 2.00 | 1.00 | - | - | 0.10 |
| J | 97.9 | - | | 2.00 | - | 0.10 |
| K | 97.9 | - | | - | 2.00 | 0.10 |

**Table 4**

| Number | TR (%) | Haze (%) | SFC (%) | DFC(%) |
|---|---|---|---|---|
| IV | 90.4 | 0.48 | 0.25 | 0.25 |
| J | 88.0 | 1.10 | 0.57 | 0.65 |
| K | 90.3 | 0.68 | 0.52 | 0.52 |

### Example IV and Comparative Experiments D through I

This series compares polycarbonate compositions of the invention with compositions to which a lubricant consisting of a combination of an ester and another agent is added in comparable amounts.

Test plates were obtained from the compositions included in Table 5 in the same way as described in Examples I through IX. The results obtained herewith are given in Table 6.

The results indicate that combinations of an ester with another agent are unsatisfactory both optically and tribologically. Only the specific combination of two esters in the composition of the invention yields the desired properties.

**Table 5**

| Number | PC (wt.%) | E1 (wt.%) | A1 (wt.%) | A2 (wt.%) | A3 (wt.%) | E4 (wt.%) | Add. (wt.%) |
|---|---|---|---|---|---|---|---|
| IV | 96.9 | 2.00 | - | - | - | 1.00 | 0.10 |
| D | 96.9 | 2.00 | - | 1.00 | - | - | 0.10 |
| E | 95.9 | 2.00 | - | 2.00 | - | - | 0.10 |
| F | 96.9 | 2.00 | 1.00 | - | - | - | 0.10 |
| G | 95.9 | 2.00 | 1.00 | 1.00 | - | - | 0.10 |
| H | 97.4 | 2.00 | - | - | 0.50 | - | 0.10 |
| I | 96.9 | 2.00 | - | - | 1.00 | - | 0.10 |

**Table 6**

| Number | TR (%) | Haze (%) | SFC (-) | DFC(-) |
|---|---|---|---|---|
| IV | 90.4 | 0.48 | 0.25 | 0.25 |
| D | 89.9 | 1.16 | 0.25 | 0.45 |
| E | 88.6 | 1.91 | 0.28 | 0.37 |
| F | 89.1 | 0.90 | 0.35 | 0.37 |
| G | 88.5 | 1.50 | 0.29 | 0.30 |
| H | 78.9 | 21.0 | 0.35 | 0.34 |
| I | 66.0 | 73.3 | 0.36 | 0.34 |

## Claims

1. Composition containing an aromatic polycarbonate and a friction reducing agent comprising a first ester of a saturated aliphatic carboxylic acid and a polyhydric alcohol and a second ester characterized in that the second ester is a monoester of a saturated aliphatic carboxylic acid having 16 to 24 carbon atoms and an alcohol having from 14 to 20 carbon atoms, the first and second ester being different from each other.

2. Composition according to claim 1 characterized in that the second ester is chosen from the group comprising stearates and behenates.

3. Composition according to claim 2 characterized in that the alcohol of the second ester has from 16 to 18 carbon atoms.

4. Composition according to any one of the claims 1-3, characterized in that the first ester is a stearate.

5. Composition according to claim 4 characterized in that the first ester is chosen from the group comprising glycerol tristearate and ethylene glycol stearate.

6. Composition according to any one of the Claims 1-5, characterized in that the total amount of the first and second ester is from 0,5 to 5 wt.% relative to the total weight of the composition.

7. Polycarbonate-containing object with a transparancy according to ASTM D1746 of at least 90%, a haziness according to ASTM D1003 of at most 0.60 % and a static friction coefficient according to ASTM D1894 of at most 0.30.

8. Toy construction element manufactured from the composition according to any of the claims 1-7.

## Patentansprüche

1. Zusammensetzung, enthaltend ein aromatisches Polycarbonat und ein Verschleißschutzmittel, umfassend einen ersten Ester aus einer gesättigten aliphatischen Carbonsäure und einem mehrwertigen Alkohol und einen zweiten Ester, dadurch gekennzeichnet, daß der zweite Ester ein Monoester aus einer gesättigten aliphatischen Carbonsäure mit 16 bis 24 Kohlenstoffatomen und einem Alkohol mit 14 bis 20 Kohlenstoffatomen ist, wobei der erste und zweite Ester unterschiedlich voneinander sind.

2. Zusammensetzung gemäß Anspruch 1, dadurch gekennzeichnet, daß der zweite Ester ausgewählt wird aus der Gruppe umfassend Stearate und Behenate.

3. Zusammensetzung gemäß Anspruch 2, dadurch gekennzeichnet, daß der Alkohol des zweiten Esters 16 bis 18 Kohlenstoffatome aufweist.

4. Zusammensetzung gemäß einem der Ansprüche 1-3, dadurch gekennzeichnet, daß der erste Ester ein Stearat ist.

5. Zusammensetzung gemäß Anspruch 4, dadurch gekennzeichnet, daß der erste Ester ausgewählt wird aus der Gruppe umfassend Glyceryltristearat und Ethylenglycolstearat.

6. Zusammensetzung gemäß einem der Ansprüche 1-5, dadurch gekennzeichnet, daß die Gesamtmenge des ersten und zweiten Esters von 0,5 bis 5 Gew.-%, relativ zum Gesamtgewicht der Zusammensetzung beträgt.

7. Polycarbonat enthaltender Gegenstand mit einer Transparenz gemäß ASTM D1746 von mindestens 90%, einer Trübung gemäß ASTM D1003 von höchstens 0,60% und einem Haftreibungskoeffizienten gemäß ASTM D1894 von höchstens 0,30.

8. Spielzeugbauelement, hergestellt aus der Zusammensetzung gemäß einem der Ansprüche 1-7.

## Revendications

1. Composition contenant un polycarbonate aromatique et un agent réduisant la friction comprenant un premier ester - d'un acide carboxylique aliphatique saturé et d'un polyol, et un second ester, caractérisé en ce que le second ester est un monoester d'un acide carboxylique aliphatique insaturé comprenant 16 à 24 atomes de carbone et d'un alcool comprenant 14 à 20 atomes de carbone, le premier et le second ester étant différents l'un de l'autre.

2. Composition selon la revendication 1, caractérisée en ce que le second ester est choisi dans l'ensemble comprenant des stéarates et des béhénates.

3. Composition selon la revendication 2, caractérisée en ce que l'alcool du second ester comprend de 16 à 18 atomes de carbone.

4. Composition selon l'une quelconque des revendications 1-3, caractérisée en ce que le premier ester est un stéarate.

5. Composition selon la revendication 4, caractérisée en ce que le premier ester est choisi dans l'ensemble comprenant du tristéarate de glycérol et du stéarate d'éthylèneglycol.

6. Composition selon l'une quelconque des revendications 1-5, caractérisée en ce que la quantité totale du premier et du second esters est comprise entre 0,5 et 5% en poids par rapport au poids total de la composition.

7. Objet contenant du polycarbonate avec une transparence selon ASTM D1746 d'au moins 90%, un trouble selon ASTM D1003 d'au plus 0,60% et un indice de friction par adhérence selon ASTM D1894 d'au plus 0,30.

8. Élément de construction jouet fabriqué à partir de la composition selon l'une quelconque des revendications 1-7.
